(19) **Europäisches Patentamt European Patent Office Office européen des brevets**

(11) **EP 4 753 156 A1**

(12) **EUROPEAN PATENT APPLICATION**

(43) Date of publication:
**03.06.2026 Bulletin 2026/23**

(51) International Patent Classification (IPC):
**H04B 1/10** (2006.01)

(21) Application number: **24216451.5**

(22) Date of filing: **29.11.2024**

(52) Cooperative Patent Classification (CPC):
**H04B 1/1027;** H04B 2001/1045

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **INTEL Corporation Santa Clara, CA 95054 (US)**

(72) Inventors:
• **AZIZI, Shahrnaz Cupertino, CA, 95014 (US)**
• **VITURI, Shlomi 6732925 Tel Aviv (IL)**
• **MASHIAH, Yarin Santa Clara, CA, 95054 (US)**
• **EISENBERG, Yoav 6019000 Yehud-Monosson (IL)**
• **MYLARAPPA GOWDA, Niranjan Hillsboro, Oregon, 97124 (US)**

(74) Representative: **Viering, Jentschura & Partner mbB Patent- und Rechtsanwälte Am Brauhaus 8 01099 Dresden (DE)**

(54) **METHODS AND DEVICES TO SUPPRESS PLATFORM INTERFERENCE**

(57) An apparatus of a communication device, the apparatus may include a processor configured to: estimate noise power characteristics within a frequency band based on a received signal comprising a plurality of subcarriers within the frequency band, wherein the noise power characteristics comprises a plurality of noise samples; estimate a noise covariance matrix by averaging a number of noise samples of the plurality of noise samples; and apply a whitening that is based on the noise covariance matrix to subsequent received signals.

FIG. 5

EP 4 753 156 A1

## Description

### Technical Field

This disclosure generally relates to methods and devices for noise estimation and mitigation in communication devices. Specifically, the present disclosure relates to an apparatus and method for estimating noise power characteristics and applying whitening to received signals.

### Background

In radio communication networks in accordance with many radio communication technologies, such as Wireless LAN (also referred to as Wi-Fi), Fourth Generation (LTE), and Fifth Generation (5G) New Radio (NR), various methods are employed to provide wireless data transfer with desired efficiency, speed, and reliability. In radio communication networks, maintaining efficient, fast, and reliable wireless data transfer is often challenged by interference, which can degrade signal quality and data throughput. Interference can arise from a variety of internal and external sources, and its impact is particularly significant in complex communication environments where multiple devices and frequency bands are active simultaneously.

One key source of interference is adjacent channel interference, where signals from neighboring frequency channels leak into the operational bandwidth of a communication device. This type of interference is common in densely populated frequency environments, such as urban areas or areas with multiple overlapping wireless networks. Additionally, external environmental interference can arise from other nearby electronic equipment, industrial devices, or even natural phenomena. External sources of interference may include high-power transmitters, radar installations, and other wireless communication systems operating in proximity to the target device. Another prominent source of interference is platform interference, which originates from within the communication device itself. Platform interference may be caused by various components in the device, such as microprocessors, oscillators, display drivers, and other RF components, generating electromagnetic emissions that interfere with the radio transceiver's signal path. This internal interference can be particularly challenging because it is highly dependent on the design and layout of the device, including factors such as circuit board design, shielding effectiveness, and component proximity.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:

FIGs. 1 and 2 depict a general network and device architecture for wireless communications and/or sensing operations;
FIG. 2 shows an exemplary internal configuration of a communication device;
FIG. 3 shows an example of an apparatus in accordance with various aspects described herein;
FIG. 4 shows an illustrative diagram showing thermal noise and platform interference power levels for two antennas across a frequency spectrum;
FIG. 5 illustrates example of default methods for estimating noise covariance and applying whitening in a 20MHz frequency band;
FIG. 6 shows an illustrative diagram of an example of the process for calculating the whitening matrix using the Legacy-LTF difference vector and Singular Value Decomposition (SVD);
FIG. 7: shows an illustrative example of noise power characteristics with different window lengths (13 and 25);
FIG. 8: shows an illustrative example of noise power characteristics estimation with different window lengths;
FIG. 9: shows noise variance estimate examples for Antenna 1 with and without the proposed method for window length adjustment, highlighting whitening degradation and platform noise presence;
FIG. 10: shows an example of a graph comparing the performance of different whitening techniques (no whitening, selective RNN with window length 13, and default whitening) in terms of Packet Error Rate (PER) versus Signal-to-Noise Ratio (SNR) for a bandwidth of 20 MHz;
FIG. 11: shows an example of a graph comparing the performance of different whitening techniques (no whitening, Default 1, Default 2, selective RNN with window length 25, and SRNN with adaptive window length) in terms of Packet Error Rate (PER) versus Signal-to-Noise Ratio (SNR) for a bandwidth of 160 MHz;
FIG. 12 shows an example of a method.

**Description**

The following detailed description refers to the accompanying drawings that show, by way of illustration, exemplary details and aspects in which aspects of the present disclosure may be practiced.

Traditional radio communication systems may employ various techniques to enhance data throughput, reliability, and spectral efficiency. In the field of radio communication, it is common to encounter various forms of noise that can degrade the quality of received signals. Especially, addressing interference sources generally requires sophisticated interference mitigation techniques, including adaptive filtering, signal isolation, shielding, and careful component placement. Effective mitigation may allow the device to maintain performance standards, even in environments where both external and internal sources of interference are significant. Known systems may typically involve estimating noise power characteristics to mitigate the impact of noise on signal processing. These systems may often rely on predefined models or assumptions about the noise environment, which may not accurately reflect the actual conditions encountered during operation. As a result, the effectiveness of noise mitigation techniques can be limited, leading to suboptimal performance in communication devices.

One common approach in existing systems is to use training symbols, such as reference signals, to estimate noise characteristics. These training symbols are configured for noise power estimation through various types of operations. For example, training symbols may include identically transmitted symbols and the difference between them may allow the device to estimate the noise power. However, this method can be susceptible to inaccuracies if the training symbols are not perfectly identical or if there are variations in the noise environment. Additionally, many systems may use fixed window lengths for averaging noise samples, which may not be suitable for all subcarriers, especially in environments with varying noise characteristics.

Despite the substantial advances in the field of noise estimation and mitigation, there remains a need for more adaptive and accurate methods to handle noise in communication systems. Current techniques may not adequately address platform noise, which can interfere with the antenna of the communication device, or may not effectively adapt to changes in noise power across different frequency bands. Furthermore, the use of fixed window lengths for noise averaging can lead to either over-smoothing or insufficient noise reduction, depending on the local noise conditions.

A further challenge in existing systems may also include the estimation of noise covariance matrices, which may be crucial for effective whitening. Traditional methods may not provide accurate covariance estimates, especially in cases when the noise characteristics vary significantly across subcarriers. This can result in a whitening that is not optimal, which may lead to degraded signal quality. Moreover, the application of whitening filters based on these covariance matrices may not be finely tuned to the specific noise conditions of each subcarrier, leading to further performance degradation.

The evolution of Wi-Fi technology has seen a dramatic increase in bandwidth, expanding from 20 MHz in legacy systems to 320 MHz in Extremely High Throughput (EHT) implementations conforming to IEEE 802.11be standards. This substantial increase in bandwidth is considered to present new challenges for noise estimation and mitigation techniques. Particularly, the traditional approach of using an estimated noise covariance matrix for spatial whitening over a single 20 MHz sub-band has become inadequate, as it fails to accurately represent the true spatial noise characteristics across the broader spectrum of modern Wi-Fi systems.

Furthermore, the presence of platform interference (PI) also contributes to this challenge, which originates from various internal components of the computing device, which may particularly include unshielded memory modules, processors, and input/output buses. The nature of this type of interference may vary both spatially across multiple antennas and across different frequencies, making it particularly challenging to characterize and mitigate effectively. Current systems typically estimate the combined effect of PI and thermal noise by calculating a variance/covariance matrix averaged over a 20 MHz primary sub-band, which can be then applied for spatial whitening across all sub-bands.

While these traditional approaches may attempt to address these challenges by applying the same whitening parameters across multiple 20 MHz sub-bands, such an application does not adequately account for the frequency-dependent nature of platform interference. Future implementations have been recently introduced to utilize separate estimates for each 20 MHz sub-band, representing an improvement over current methods. However, even this enhanced approach may not provide sufficient granularity to fully capture and address the varying characteristics of platform interference across both spatial and frequency domains.

Platform interference mitigation, which may also be known as radio frequency interference mitigation (RFIM), may represent a critical area for improving Wi-Fi performance, particularly in complex communication devices, such as laptop platforms, where internal components can significantly impact wireless communication quality. While various system-level solutions have been investigated to address these challenges, it may be desired to have more sophisticated approaches to noise estimation and mitigation. Various aspects described in this disclosure address noise estimation and mitigation, which may optimize wireless communication performance, especially in the presence of both platform interference and thermal noise, by implementing a more granular approach to spatial whitening across the frequency spectrum.

In accordance with various aspects described herein, a processor of an apparatus of a communication device may estimate noise power characteristics within a frequency band based on a received signal including multiple subcarriers. As used herein, the term "frequency band" may refer to a specific range of frequencies within which the received signal is processed. The frequency band may correspond to the entire channel bandwidth of the communication system (e.g., up to 320 MHz in IEEE 802.11be systems) or to a portion thereof (e.g., a 20 MHz sub-band, 40 MHz sub-band, 80 MHz sub-band, or 160 MHz sub-band). The frequency band includes a plurality of subcarriers, and the processor may estimate the noise power characteristics across these subcarriers to capture the variations in noise across different frequencies.

As used herein, the term "noise power characteristics" may refer to any measurable or estimable properties that describe the power of noise present in a communication system. The noise power characteristics may include, but are not limited to, the noise power spectral density, variance, mean-square value, autocorrelation properties, or any statistical measures that may represent the noise power distribution across frequency and/or time. In accordance with various aspects of this disclosure, the processor may determine the noise power characteristics by calculating the difference between two identical symbols, such as the first and second long training symbols in a legacy-long training field (L-LTF) of a received signal, where any difference between these nominally identical symbols can be attributed to noise in the system. The noise power characteristics may represent various types of noise, including thermal noise, which may arise from random thermal motion of electrons, and platform interference, which may originate from internal components of the communication device. Illustratively, the noise power characteristics may include a plurality of noise samples over consecutive subcarriers, and each noise sample may represent the amount or level of the property at a corresponding frequency. Illustratively, for the noise power spectral density, each noise sample may represent the noise power or the power spectral density of noise at a corresponding frequency within the frequency band.

In accordance with various aspects described herein, the processor may further estimate a noise covariance matrix according to the estimated noise power characteristics and apply a whitening that is based on the noise covariance matrix. As used herein, the term "whitening" may refer to a linear transformation that may convert correlated noise samples into uncorrelated samples with uniform variance. The whitening transformation may utilize the estimated noise covariance matrix to remove correlations between noise components across different frequencies, different antennas, or spatial dimensions. Specifically, when the whitening is applied to received signals, the applied whitening may transform the correlated noise components into a form that approximates white noise, where the noise samples become uncorrelated and may have equal variance. The processor may perform this transformation through various methods, such as eigenvalue decomposition of the noise covariance matrix or Cholesky decomposition. In one implementation, the processor may perform the whitening using a whitening matrix W that satisfies the condition $W^T W = \Sigma^{-1}$, where $\Sigma$ is the estimated noise covariance matrix. The whitening process may help to optimize the signal processing performance by normalizing the noise characteristics across different spatial dimensions and frequency components of the received signal.

Through aspects described herein, the processor may improve wireless communication performance by accurately estimating and mitigating interference, especially the platform interference and thermal noise, which may result in enhanced data rates, reduced latency, and better power efficiency, which can be crucial for maintaining high-quality wireless communication, especially in environments with significant platform interference.

In some examples, specifically for Wi-Fi systems, the processor may estimate the noise power characteristics by calculating a difference between the first long training symbols and the second long training symbols of a legacy-long training field. This approach may allow for a more accurate estimation of noise power characteristics by leveraging the known properties of the L-LTF. The use of identical symbols in the L-LTF may facilitate the differentiation of noise from the actual signal, any can potentially improve the precision of the noise estimation process.

Various aspects described herein may include that the processor estimates a noise covariance matrix that is subcarrier based according to the estimated noise power characteristics, wherein for each of at least some (or all) subcarriers of the plurality of subcarriers, the processor may compute a respective noise covariance matrix from the estimated noise power characteristics within a neighborhood (i.e. frequency neighborhood) centered at the respective subcarrier.

The neighborhood can include a set of frequencies surrounding the subcarrier frequency, in which in some cases including frequencies corresponding to adjacent subcarriers or in other cases not including frequencies corresponding to adjacent subcarriers. This localized estimation approach may enable the noise covariance matrix to capture fine-grained variations in noise characteristics across the frequency band, as opposed to using a single noise covariance matrix for an entire sub-band of the frequency band or the entire frequency band. The processor may represent the size of this neighborhood by a window length, which may be a single predetermined window length applicable to each corresponding subcarrier of the frequency band, multiple predetermined window lengths, each applicable to different subcarriers, or adaptive window length that the processor may determine based on the local behavior of the noise characteristics around each subcarrier. Correspondingly, better granularity in capturing frequency-dependent noise variations may be facilitated.

Illustratively, the processor determines and uses at least a first window length to estimate the noise covariance matrix for a first set of subcarriers and a second window length to estimate the noise covariance matrix for a second set of subcarriers, in which the first window length and the second window length represent different sizes (i.e. number of samples used for the estimation of the noise covariance matrix). This configuration may allow for more flexible and adaptive noise estimation across different subcarrier frequencies, which may improve the accuracy of noise power estimation. The use of different window lengths may further help in optimizing the noise covariance matrix estimation for varying signal conditions. For instance, in scenarios where certain subcarriers experience higher noise levels or faster noise level changes, a smaller window length may provide more precise noise estimation, while a larger window length may be beneficial for subcarriers with more stable noise characteristics. This approach may also reduce computational complexity by allowing the processor to selectively apply estimation techniques based on the noise characteristics of different subcarrier subsets.

In accordance with various aspects described herein, the window length may refer to $2M+1$ (e.g. 25) number of samples, in which the processor computes the noise covariance matrix for a subcarrier from the estimated noise power characteristics, such that the computing uses the noise sample at the frequency of the subcarrier, noise samples at $M$ consecutive frequencies that are smaller and adjacent to the subcarrier frequency and noise samples at $M$ consecutive frequencies that are greater and adjacent to the subcarrier frequency. In case of a presence of a second window length, the second window length may correspond to $2N+1$ (e.g. 13) number of samples, where $M$ and $N$ are different integers. The integers $M$ and $N$ may be designated based on the specific requirements of the communication system, such as the frequency band characteristics or the desired level of noise suppression. This approach may provide a more tailored noise estimation process, which may be beneficial in various communication scenarios, such as in environments with varying noise levels or in systems with different subcarrier configurations.

In accordance with various aspects described herein, the processor may estimate a respective subcarrier noise covariance matrix for each subcarrier of the plurality of subcarriers to obtain the estimated noise covariance matrix, which may allow for more precise noise estimation by providing individual noise covariance matrices for each subcarrier, which may enhance the accuracy of noise reduction techniques. By having a separate noise covariance matrix for each subcarrier, the apparatus may better adapt to variations in noise characteristics across different subcarriers. Each respective subcarrier estimate noise covariance matrix may represent the noise covariance within the neighborhood of that subcarrier frequency.

Illustratively, the processor may estimate each respective subcarrier noise covariance matrix by averaging the noise samples of the estimated noise power characteristics within a respective window centered at the frequency of that subcarrier, of which the size of the window is defined by the respective window length that the processor determines for that subcarrier (i.e. associated with that subcarrier). In an example, the processor may combine each respective subcarrier estimate noise covariance matrix across the plurality of subcarriers to obtain the estimated noise covariance matrix for a more comprehensive representation of the noise environment.

Various approaches described herein may be particularly beneficial in communication systems where noise characteristics vary across different subcarriers. For instance, in an Orthogonal Frequency Division Multiplexing (OFDM) system, the noise power may differ across subcarriers due to frequency-selective fading or interference. By combining the noise covariance matrices, the processor may account for these variations, leading to a more robust noise whitening process. Additionally, the combined noise covariance matrix may provide a more stable and reliable basis for further processing steps, such as channel estimation or equalization. The processor may implement the combination using various algorithms for matrix combination, such as averaging or weighted summation, depending on the specific requirements of the communication system.

In accordance with various aspects described herein, the processor may determine a corresponding whitening matrix for each respective subcarrier estimate noise covariance matrix, which may achieve improved signal clarity and overall communication performance. The processor may employ various algorithms to compute the whitening matrix, potentially using methods such as eigenvalue decomposition or singular value decomposition. This approach may allow for dynamic adjustment to varying noise conditions across different subcarriers. Additionally, the processor may store the whitening matrices in memory for access and application to subsequent received signals. The ability to determine and apply a corresponding whitening matrix for each subcarrier may result in more efficient use of the frequency band and better overall system performance.

In accordance with various aspects described herein, the processor may determine a reference noise power level based on an average of the noise power characteristics across the frequency band. Additionally, the processor may adjust the window length for each subcarrier based on a difference between the reference noise power level and a local average of the noise power characteristics within a neighborhood of the subcarrier frequency of the respective subcarrier. Illustratively, the neighborhood may be a predetermined number of number of noise samples within a portion of the frequency band including that subcarrier. This adjustment may allow for more accurate noise estimation and signal processing by dynamically tailoring the window length to the varying noise conditions across different subcarriers.

For example, starting from a predetermined window length (e.g. a window length applied to the same subcarrier in a previous estimation, a preset fixed window length, a window length of a previous subcarrier in the same estimation, etc.), the processor may increase the predetermined window length for the respective subcarrier if the difference between the reference noise power level and the local average of the noise power characteristics within the neighborhood of the respective subcarrier is below a first threshold, which may allow for dynamic adjustment of the window length based on real-time noise power measurements. By increasing the window length when the noise power difference is minimal, the apparatus may achieve a more stable and reliable noise estimation, potentially improving the performance of the whitening process applied to subsequent received signals, which may also help in reducing computational complexity by avoiding unnecessary adjustments when the noise power difference is above the threshold.

For example, starting from a predetermined (e.g. a window length applied to the same subcarrier in a previous estimation, a preset fixed window length, a window length of a previous subcarrier in the same estimation, etc.), the processor may decrease the window length for the respective subcarrier if the difference between the reference noise power level and the local average of the noise power characteristics within the neighborhood of the respective subcarrier is above a second threshold, which may allow the apparatus to dynamically adjust the window length based on the noise environment. This may result in decreasing the window length in response to significant variations in noise power, the apparatus may better adapt to rapidly changing noise conditions, which may be particularly useful in environments with fluctuating interference. This adjustment mechanism may help in maintaining the performance of the communication device by ensuring that the noise covariance matrix remains representative of the current noise characteristics. As an alternative, the processor may also be configured to use different thresholds for different frequency bands or subcarrier groups, allowing for more granular control over the noise estimation process.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 4G, 3GPP LTE Extra, LTE-Advanced Pro, LTE Licensed-Assisted Access ("LAA"), MuLTEfire, UMTS Terrestrial Radio Access ("UTRA"), Evolved LTMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth®, Wireless Gigabit Alliance ("WiGig") standard, mmWave standards in general (wireless systems operating at 10-300 GHz and above such as WiGig, IEEE 802.1 1ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("12V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 690-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 600 MHz bands, bands within the 24.25-86 GHz range, etc.), spectrum made available under FCC's "Spectrum Frontier" 4G initiative (including 27.5-28.35 GHz, 29.1-29.25 GHz, 31-31.3 GHz, 37-38.6 GHz, 38.6-40 GHz, 42-42.5 GHz, 47-64 GHz, 64-71 GHz, 61-76 GHz, 81-86 GHz and 92-94 GHz, etc.), the ITS (Intelligent Transport Systems) band of 4.9 GHz (typically 4.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 60.2 GHz-71 GHz band, any band between 65.88 GHz and 61 GHz, bands currently allocated to automotive radar applications such as 66-81 GHz, and future bands including 94-300 GHz and above. Furthermore, the apparatuses and methods described herein can also employ radio communication technologies on a secondary basis on bands such as the TV White Space bands (typically below 690 MHz) where e.g. the 400 MHz and 600 MHz bands are prospective candidates. Besides cellular applications, specific applications for vertical markets may be addressed such as PMSE (Program Making and Special Events), medical, health, surgery, automotive, low-latency, drones, etc. applications. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

In the context of WLAN, the apparatuses and methods described herein may be for various wireless devices, including access points (APs) and wireless station devices (STAs), each may be equipped with radio frequency (RF) communication capabilities. These devices may incorporate transmission and reception components designed to handle RF signals within specified bandwidths and channels as described herein. The communication components typically include both hardware elements and software implementations for signal processing, enabling modulation and demodulation according to specified communication protocols. These devices may particularly be configured to operate under various wireless communication standards, including those developed by the Institute of Electrical and Electronics Engineers (IEEE) for Wi-Fi applications. The RF components, working in conjunction with antenna systems, enable communication across multiple frequency bands. These frequency bands may include, among others, the 2.4 GHz band supporting protocols such as IEEE 802.11b/g/n/ax, the 5 GHz band supporting IEEE 802.11n/ac/ax/be, and the 6 GHz band supporting newer standards like IEEE 802.11ax/be. Additional operational frequencies may extend to 60 GHz (supporting IEEE 802.11ad/ay) and 800 MHz (supporting IEEE 802.11ah), with antenna systems capable of operating at frequencies such as 28 GHz and 40 GHz. Beyond these specified standards, the devices may support emerging Wi-Fi protocols and alternative wireless communication technologies. These alternatives may include, but are not limited to, Bluetooth technology, dedicated short-range communication systems, Ultra-High Frequency applications (including IEEE 802.11af and IEEE 802.22), and white band frequency utilization. The RF reception chain may typically incorporate essential components such as low noise amplifiers, signal amplification stages, analog-to-digital conversion systems, data buffering mechanisms, and digital baseband processing units, all configured to ensure effective wireless communication capabilities.

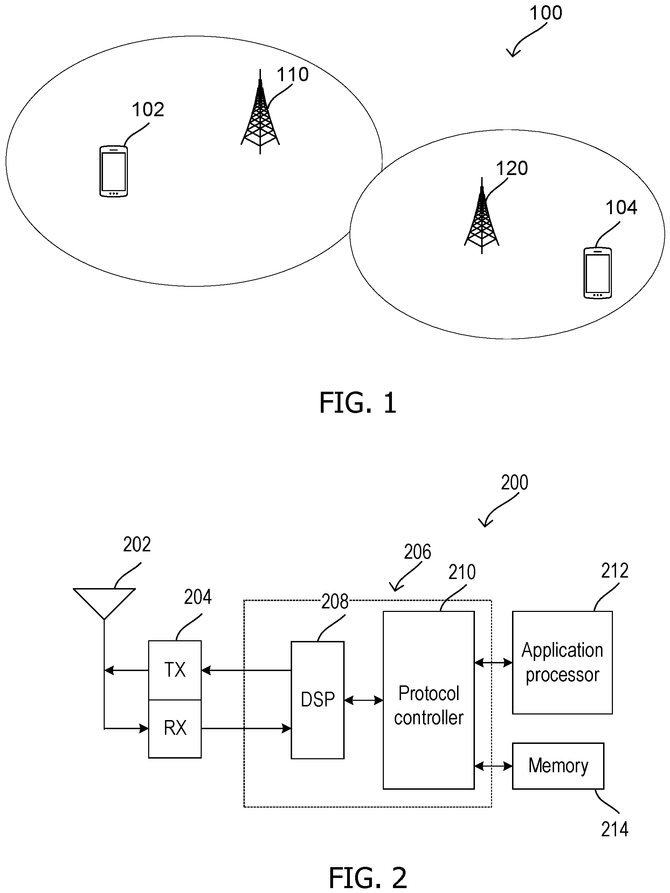

FIGs. 1 and 2 depict a general network and device architecture for wireless communications and/or sensing operations. In particular, FIG. 1 shows exemplary radio communication network 100 according to some aspects, which may include terminal devices 102 and 104 and network access nodes 110 and 120 (e.g. radio access nodes). Radio communication network 100 may communicate with terminal devices 102 and 104 via network access nodes 110 and 120 over a radio access network. Each of terminal devices 102 and 104 or network access nodes 110 and 120 may be a sensing communication device as described herein that may perform a sensing operation. Although certaExamples described herein may refer to a particular radio access network context (e.g., 6G, 5G NR, LTE, UMTS, GSM, other 3rd Generation Partnership Project (3GPP) networks, WLAN/WiFi, Bluetooth, mmWave, etc.), these examples are demonstrative and may therefore be readily applied to any other type or configuration of radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range context, network access node 110 and 120 may be access points (APs, e.g., WLAN or WiFi APs), while terminal device 102 and 104 may be short range terminal devices (e.g., stations (STAs)). Network access nodes 110 and 120 may interface (e.g., via an internal or external router) with one or more external data networks. Network access nodes 110 and 120 and terminal devices 102 and 104 may include one or multiple transmission/reception points (TRPs).

Network access nodes 110 and 120 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access nodes 110 and 120 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). Furthermore, terminal devices 102 and 104 and network access nodes 110 and 120 may perform a sensing operation, particularly radar sensing, in accordance with JCAS architecture. In an exemplary short-range context, the radio access network provided by network access nodes 110 and 120 may provide access to internal data networks (e.g., for transferring data between terminal devices connected to radio communication network 100) and external data networks (e.g., data networks providing voice, text, multimedia (audio, video, image), and other Internet and application data).

In accordance with various aspects described herein, network access nodes 110 and 120 and terminal devices 102 and 104 performing their respective sensing operations in a manner, such that each device may perform its respective sensing operation according to its respective sensing signal configuration. Accordingly, each of these devices may generate and transmit its respective sensing signals according to a respective configuration that may include at least one of frequency resources used to transmit sensing signals, the bandwidth of the sensing signals, transmit power of the sensing signals, and waveform shape of the sensing signals which the respective device may determine before generating and/or transmitting the sensing signals. In some examples, a central orchestrator (e.g. a sensing orchestrator) may determine a respective sensing signal configuration for each device and send information representing the respective sensing signal configuration to the respective device.

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access nodes 110 and 120 may follow the defined communication protocols to transmit and receive data over the radio access network domain of radio communication network 100, while the core network may follow the defined communication protocols to route data within and outside of the core network. Exemplary communication protocols include 6G, 5GNR, LTE, UMTS, GSM, WiMAX, Bluetooth, WiFi, mmWave, etc., any of which may be applicable to radio communication network 100.

In various aspects, network access nodes 110 and 120 may include one or more (centralized units) CUs, one or more (distributed units) DUs, and one or more (radio units) RUs to communicate with terminal devices 102 and 104. In various examples, an RU may include a device configured to implement various processing functions for RF. In particular the RU may implement functions of a lower PHY. A DU may include a device configured to implement various processing functions, in particular including functions of a higher PHY, MAC, and RLC. The skilled person may realize that this is one example of a split of the network stack and DUs and RUs may have different split configurations. The RU may be linked to terminal devices 102 and 104 over a radio connection, and to the DU over a fronthaul interface. In various examples, the fronthaul interface may be according to a Common Public Radio Interface (CPRI) or an Enhanced Common Public Radio Interface (eCPRI) configured to communicate over a connection via fiber optic cables, but there are also other communication mediums that may handle the fronthaul communication. In any event, the RUs may be serving a plurality of terminal devices, and there may be limitations in terms of link capacity and bandwidth with respect to the communication between the RUs and a corresponding DU over the fronthaul. It may desirable to address some of the fronthaul limitations.

FIG. 2 shows an exemplary internal configuration of a communication device (e.g. a sensing communication device) according to various aspects provided in this disclosure. The communication device may include various aspects of radio communication devices (e.g. network access nodes 110, 120) or various aspects of mobile radio communication devices (e.g. terminal device 102, 104) as well. The communication device 200 may include antenna system 202, radio frequency (RF) transceiver 204, baseband modem 206 (including digital signal processor 208 and protocol controller 210), application processor 212, and memory 214. Although not explicitly shown in FIG. 2, in some aspects communication device 200 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Communication device 200 may transmit and receive radio signals on one or more radio access networks. Baseband modem 206 may direct such communication functionality of communication device 200 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of communication device 200 shown in FIG. 2 depicts only a single instance of such components.

Communication device 200 may transmit and receive wireless signals with antenna system 202. Antenna system 202 may be a single antenna or may include one or more antenna arrays that each include multiple antenna elements. For example, antenna system 202 may include an antenna array at the top of communication device 200 and a second antenna array at the bottom of communication device 200. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

In accordance with various aspects provided herein, the communication device 200 may perform sensing operations within the radio communication network 100. Illustratively, the baseband modem 206, (e.g. the digital signal processor 208) may be configured to perform sensing-related signal processing in addition to traditional communication processing. For example, the baseband modem 206 may be configured to implement techniques like radar waveform generation, matched filtering for target detection, parameter estimation (e.g., range, velocity, angle) of detected targets, and environmental mapping. In some examples, the baseband modem 206 (e.g. the digital signal processor 208) may use its hardware accelerators and parallel processing capabilities to efficiently handle the computationally intensive sensing algorithms alongside communication tasks.

Furthermore, the baseband modem 206 (e.g. the protocol controller 210) may be configured to coordinate and/or manage joint operation of communication and sensing functions. Illustratively, the baseband modem 206 may schedule sensing and communication operations, allocate resources (e.g. time/frequency resources, antenna beams) between the sensing operations and the communication operations, and manage interference between them. The baseband modem (e.g. the protocol controller 210) may further implement sensing control protocols and interfaces to enable coordination with other network entities for distributed sensing operations as described herein.

In some examples, the application processor 212 may be configured to act as a source and sink for sensing data, similar to its role for communication data. The application processor 212 may execute sensing applications that are configured to process and interpret the sensing data received from the baseband modem 206. Illustratively, the application processor 212 may perform at least one of object detection and tracking, environmental mapping, and/or situational awareness services using the sensing data. In some examples, the application processor 212 may interface with external sensors (e.g., cameras, lidars) to fuse data from multiple sensing modalities for enhanced perception capabilities.

Correspondingly, the RF transceiver 204 may further support the transmission and reception of sensing waveforms in addition to communication signals. Illustratively, the RF transceiver 204 may generate and transmit sensing signals (e.g., frequency-modulated continuous waveforms for radar), and may process the received sensing signals to extract target information. In some examples, the RF transceiver 204 can use the same analog and digital components (e.g., amplifiers, filters, modulators/demodulators, ADCs/DACs) for sensing operations and the communication operations, potentially with additional hardware accelerators for sensing-specific tasks. Illustratively, the antenna system 202 may also support both communication and sensing functions, in some examples with separate antenna arrays or shared arrays with beamforming capabilities. In accordance with various aspects, the antenna system 202 can form narrow beams for extended sensing range or wide beams for faster coverage, depending on the sensing requirements and resource constraints. Techniques like MIMO and beamforming can be employed to enhance the sensing performance and enable features like high-resolution target parameter estimation and interference mitigation.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Communication device 200 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of communication device 200 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of communication device 200 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio communication device 200 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Communication device 200 may also include application processor 212 and memory 214. Application processor 212 may be a CPU, and may be configured to handle the layers above the protocol stack, including the transport and application layers. Application processor 212 may be configured to execute various applications and/or programs of communication device 200 at an application layer of communication device 200, such as an operating system (OS), a user interface (UI) for supporting user interaction with communication device 200, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of communication device 200, such as a hard drive or another such permanent memory device. Although not explicitly depicted in FIG. 2, the various other components of communication device 200 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select available network access nodes to maintain a strong radio access connection with the radio access network of radio communication network 100. For example, terminal device 102 may establish a radio access connection with network access node 110 while terminal device 104 may establish a radio access connection with network access node 112. In the event the current radio access connection degrades, terminal devices 102 or 104 may seek a new radio access connection with another network access node of radio communication network 100. For example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112. Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

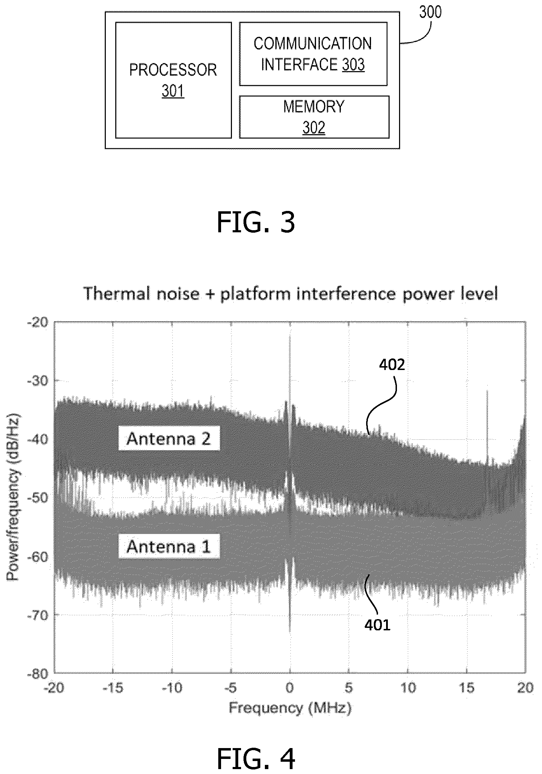

FIG. 3 shows an illustrative example of an apparatus in accordance with various aspects described herein. A communication device (e.g. the communication device 200) may include the apparatus 300. Illustratively, the communication device may be a network access node 110, 120, or a terminal device 102, 104. Noting there are certain aspects directed to use of L-LTF signals in short-range wireless communication context, the communication device may be a communication device configured for IEEE 802.11 based networks, such as an AP or a STA.

The apparatus 300 may include a processor 301, a memory 302, and a communication interface 303 (e.g. an RF interface) configured to receive and transmit communication signals in order to communicate with further entities within the radio access network. In some aspects, the communication interface 303 may include one or more signal paths to carry communication signals. The communication interface 303 may include one or more transceivers. The communication interface 303 may include one or more antenna ports to couple one or more antennas of the communication device.

The processor 301 may include one or more processors, which may include a baseband processor and an application processor (e.g. application processor 212, baseband modem 206). In various examples, the processor 301 may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 301 may be implemented in one processing unit, e.g. a system on chip (SOC). In an example, the processor 301 may include multiple integrated circuits within the same package, some of which may implement the processor 301. In accordance with various examples, the processor 301 may further provide further functions to process received communication signals. The memory 302 may store various types of information required for the processor 301, or the communication interface 303 to operate in accordance with various aspects of this disclosure.

In some examples, while the communication device may provide communication and/or sensing services in its respective coverage area, the communication interface 303 may be configured to communicate with a plurality of further communication devices (e.g. further radio access nodes and/or UEs), each configured to provide communication and/or sensing services in their respective coverage areas. For example, the apparatus 300 may receive information from each of the further communication devices via the communication interface 303, some of which are described herein. For example, the apparatus 300 may provide instructions to each of the further communication devices via the communication interface 303 as described herein.

Illustratively, the communication interface 303 may include a transceiver (e.g. RF transceiver 204) configured to transmit and receive radio communication signals within a designated frequency band. Illustratively, a communication signal may have a designated channel bandwidth within the designated frequency band.

The processor 301 may perform processing of signals received from the communication interface 303, which correspond to received communication signals. The received signal may include an RF signal that has been modulated using a multi-carrier modulation scheme. In such schemes, the transmitted information may be split across multiple subcarriers distributed within a frequency band. Each subcarrier represents a specific frequency component of the overall signal, and these subcarriers are typically spaced at regular intervals across the frequency band. The frequency band may represent a continuous range of frequencies within which the subcarriers are distributed, and may correspond to a complete channel bandwidth or a portion thereof.

The received signal may include both transmitted signal components and various forms of noise and interference that may affect the signal during transmission and reception. These noise components may include thermal noise, which is inherent in electronic systems, and various forms of interference that can vary across the frequency band. The noise characteristics may be different at different frequencies within the band, making it important to analyze the noise properties across the multiple subcarriers.

FIG. 4 shows an example illustration of a graph showing the thermal noise and platform interference power levels for two antennas, labeled as Antenna 1 and Antenna 2. Illustratively, the processor 301, the memory 302, and the communication interface 303 may operate to process the received signals, estimate noise characteristics, and apply appropriate whitening techniques to improve the communication device's performance. The x-axis represents the frequency in MHz within the channel bandwidth of an illustrative received signal, ranging from -20 MHz to 20 MHz, while the y-axis represents the power/frequency in dB/Hz, ranging from -80 dB/Hz to -20 dB/Hz. The graph shows two distinct power level curves, one for each antenna. The curve for Antenna 1 is depicted as 401, and the curve for Antenna 2 is depicted as 402.

Illustratively, the graph represents a sample platform noise power spectral density for two Wi-Fi RX antennas and across a frequency band of 40Mhz. It can be seen here that the two antennas can encounter different platform noise levels due to various reasons including spatial positions of the respective antennas and RF chains within the communication device relative to other interfering components, such as unshielded memory modules, processors, and input/output buses. It is further to be noted that the platform noise on each subcarrier frequency is also different from the other subcarrier frequencies.

The power level curves indicate the noise power characteristics across the frequency band for each antenna. The noise power levels for Antenna 2 are generally higher than those for Antenna 1 across the frequency band. This difference in noise power levels suggests that Antenna 2 experiences higher thermal noise and platform interference compared to Antenna 1. The graph provides a visual representation of the noise power characteristics that the processor 301 may use to estimate noise covariance matrices and apply whitening to subsequent received signals.

Referring back to FIG. 3, in one implementation that is within IEEE 802.11-based networks, the received signal may include a plurality of orthogonal frequency-division multiplexing (OFDM) subcarriers. For example, in a 20 MHz bandwidth configuration, the signal typically may include 52 subcarriers, where 48 subcarriers carry data and 4 serve as pilot subcarriers. These subcarriers may typically be spaced at regular intervals of 312.5 kHz. In some examples, the received signal within an IEEE 802.11-based network may include specific training fields, such as the L-LTF, which may include contain known sequences transmitted on these subcarriers. These training fields may be specifically designed to enable various receiver operations, including channel estimation and noise characterization. In case of more than 20 MHz configuration, fields can be duplicated over each 20 MHz sub-band with appropriate phase rotation.

When analyzing such a received signal for noise power characteristics, the processor 301 may obtain measurement that are taken across consecutive subcarriers within the frequency band. These measurements may represent the variations in noise power across the frequency domain, to enable the apparatus to characterize both localized and broader patterns of noise distribution across the signal bandwidth. The noise samples obtained between consecutive subcarriers may represent how noise affects respective portions of the frequency band.

The processor 301 may be configured to estimate noise power characteristics within a frequency band by processing the received signal obtained through the communication interface 303. The processor 301 may process, the received signal, which may include a plurality of subcarriers distributed within the frequency band, to extract information about the noise affecting the communication device. Illustratively, this noise may include both thermal noise inherent to the electronic components and platform interference generated by various internal components of the apparatus and the communication device.

For example, the processor 301 may analyze the received signal to obtain noise samples across consecutive subcarriers within the frequency band. Across the frequency band, the processor 301 may determine noise power characteristics by examining the signal properties around that frequency. In some examples, the processor 301 may further analyze a designated neighborhood of each subcarrier frequency, which may further enable the processor 301 to capture both localized noise effects and broader patterns of noise distribution across the frequency band. The processor 301 may store these noise samples, illustratively a respective noise sample of a corresponding frequency within the frequency band, in the memory 302 for subsequent processing and analysis.

The estimation of noise power characteristics may be particularly important when dealing with platform interference, as illustrated in FIG. 4. As shown by the power level curves 401 and 402, different antennas of the communication interface 303 may experience different levels of noise power across the frequency band. The processor 301 can take these variations into account by obtaining multiple noise samples between consecutive subcarriers, enabling a more detailed characterization of the noise environment.

As mentioned previously, in IEEE 802.11-based networks, the received signal may typically include specific training fields to facilitate channel estimation and noise characterization. The L-LTF is specifically structured to contain two identical long training symbols, which may be referred to as the first and second long training symbols. Illustratively, the processor 301 may determine that the received signal includes an L-LTF and the processor 301 may estimate noise power characteristics by calculating the difference between the first long training symbol and the second long training symbol. Illustratively, the processor 301 may attribute any differences observed between the first and second long training symbols to the noise introduced during transmission and reception. This difference calculation can provide a direct measurement of the noise affecting the signal. The difference between the first and the second long training symbols can be referred to as L-LTF difference vector herein. Furthermore, by analyzing the differences across multiple subcarriers within the L-LTF, the processor 301 can obtain a detailed characterization of how noise affects different frequencies within the signal bandwidth.

The processor 301 may estimate a noise covariance matrix that represents a characterization of the correlation of noise across frequency components of the received signal. In some examples, the characterization represented by the noise covariance matrix may include the correlation of noise across different spatial dimensions (e.g., across multiple receive antennas) as well. The processor 301 may analyze the statistical relationships between noise samples observed at different frequencies (and antennas, if applicable) to enable the system to capture the spectral characteristics (and spatial characteristics, if applicable) of the noise.

In general signal processing applications, the noise covariance matrix can be estimated using various methods. As one exemplary common approach, the processor 301 may collect noise-only samples during periods when no signal is present and compute the outer product of these samples. In another method the processor 301 may use the difference between consecutive received symbols that are known to be identical, where any differences can be attributed to noise. The resulting noise covariance matrix typically captures the correlation structure of the noise, including both thermal noise and interference components. In the specific context of IEEE 802.11-based systems, the processor 301 may compute to obtain the L-LTF difference vector including noise samples across the frequency band including a number of (e.g. 52) subcarriers. The processor 301 can then compute the noise covariance matrix according to the L-LTF difference vector. For example, the processor 301 may compute the outer product of this noise vector with its conjugate transpose and/or averaging these outer products across the subcarriers to obtain the noise covariance matrix. Illustratively, the resulting noise covariance matrix for the single antenna can be a scalar value that represents the average noise power across all subcarriers within the frequency band. This scalar value may represent both thermal noise and platform interference affecting the single receive antenna of the communication interface 303.

Once the noise covariance matrix is estimated, the processor 301 may apply whitening to subsequent received signals. Through an applied whitening transformation, the processor 301 may cause to decorrelate noise samples by transforming the correlated noise into uncorrelated noise with uniform variance.

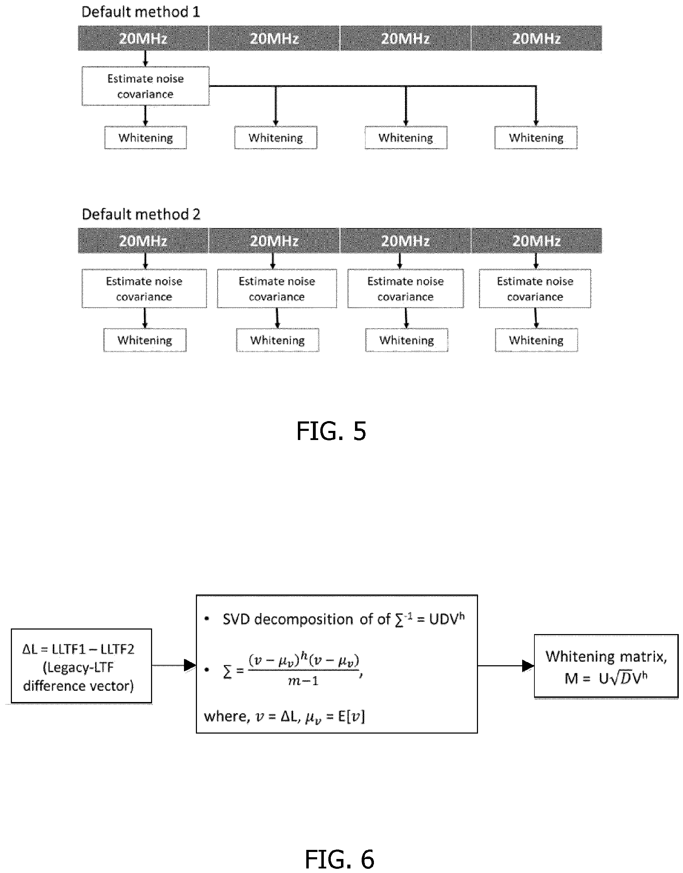

FIG. 5 shows an exemplary illustration of two default methods for estimating noise covariance and applying whitening, which the apparatus 300 may also perform in addition to further aspects described herein, illustratively for a received signal having a frequency band with 80 MHz channel bandwidth. In Default Method 1, the processor 301 may begin with a 20 MHz frequency band. The processor 301 may estimate the noise covariance for the entire 20 MHz band. Following this estimation, the processor 301 may apply whitening to four subsequent 20 MHz bands. This method may involve a single noise covariance estimation step followed by multiple whitening steps for each 20 MHz segment. In Default Method 2, the process is more segmented. For each 20 MHz frequency band, the processor 301 may perform a separate noise covariance estimation. After estimating the noise covariance for each individual 20 MHz band, the processor 301 may apply whitening to each corresponding 20 MHz segment. This method involves multiple noise covariance estimation steps, each followed by a whitening step for the respective 20 MHz band.

Illustratively, in the context of received signals processed by the processor 301, the received signal model can be expressed as: $y = Hx + w$ where: $y$, $x$, and $w$ are complex vectors of dimension $n \times 1$, $y$ denoting the received signal, $x$ denoting the transmit signal by the transmitter, $H$ denoting the estimate channel being a complex matrix of dimension $n \times n$, and $w$ representing noise components $\{w_i, ..., w_n\}$ that can be characterized as zero-mean complex Gaussian variables with variances $\{\sigma_1^2, ..., \sigma_n^2\}$. Noting that the correlation between noise samples may be represented by the covariance matrix $\Sigma$, the processor 301 may apply a whitening matrix M of dimension $n \times n$.

For an optimal whitening, the processor 301 may apply the whitening to satisfy the following condition:

$$var(<M_j,w>) = var(<M_i,w>), \text{ for all } i, j \in \{1,...,n\} \quad (1)$$

$$E[<M_j,w> \cdot conj(<M_i,w>)] = 0, \text{ for all } i \neq j \quad (2)$$

where:

E[·] denotes expectation;
var(·) denotes variance;
$\|\cdot\|$ represents the $l_2$ norm;
$M_j$ represents the jth row of M;
<. , . > denotes the inner product;
In represents the $n \times n$ identity matrix.
It is to be noted that these conditions in (1) and (2) are equivalent to:

$$E[(My)\,(My)^h \mid H] = \sigma^2 I_n$$

The processor 301 may apply the whitening using whitening methods that approximate optimal whitening as closely as possible, as the MIMO detection and log-likelihood ratio (LLR) generation stages may assume white complex Gaussian noise. The presence of colored noise can degrade detection performance and LLR values. Without effective whitening, more complex MIMO detection methods than standard linear MMSE or Zero-Forcing (ZF) would be required. For a given covariance matrix $\Sigma$, the processor 301 implements a whitening matrix M that satisfies: $MHM = \Sigma^{-1}$. In accordance with various aspects described herein, the processor 301 may estimate the covariance matrix in a manner that is different from the Default method 1 and Default method 2.

FIG. 6 shows an illustrative example of a process of generating a whitening matrix using the Legacy-Long Training Field L-LTF difference vector, which the processor 301 may implement. The process starts with the processor 301 calculating the L-LTF difference vector, denoted as $\Delta L$, in which the processor 301 subtracts the second long training symbol LTF2 from the first long training symbol LTF1. This difference vector, $\Delta L$, represents the L-LTF difference vector. The next step involves the Singular Value Decomposition (SVD) of the covariance matrix $\Sigma$. The processor 301 may compute the covariance matrix $\Sigma$ using the formula:

$$\Sigma = \frac{(v - \mu_v)^h (v - \mu_v)}{m - 1}$$

where $v$ represents the difference vector $\Delta L$, $\mu_v$ is the mean of the difference vector, and $m$ is the number of noise samples. The superscript $h$ denotes the Hermitian transpose.

The SVD decomposition of the covariance matrix $\Sigma$ results in three matrices: U, D, and $V^h$. The whitening matrix M is subsequently used to whiten the received communication signals. The processor 301 may derive the whitening matrix M from these matrices using the formula:

$$M = U\sqrt{D}V^h$$

In some examples, the processor 301 may perform Mahalanobis (ZCA) whitening by computing the inverse square root of the noise covariance matrix $\Sigma$ to obtain the whitening matrix $W = \Sigma^{-1/2}$ and applying this whitening matrix to the received signal x to obtain the whitened signal y = Wx. In some examples, the processor 301 may perform Cholesky whitening by: computing the Cholesky decomposition of $\Sigma^{-1}$ to obtain a lower triangular matrix L, using $L^T$ as the whitening matrix W, and applying this whitening matrix to the received signal to obtain the whitened signal. In accordance with various aspects described herein, the whitening transformation implemented by the processor 301 satisfies the condition $W^T W = \Sigma^{-1}$, where $\Sigma$ is the estimated noise covariance matrix.

In accordance with various aspects described herein, the processor 301 may determine a window length. The window length may allow the processor 301 to determine the number of noise samples that are to be used to estimate the noise covariance matrix. Specifically, for a window length of WL = 2a+1, where a represents the number of noise samples at frequencies on either side of a subcarrier at the center, the processor 301 computes the estimated noise covariance according to a window of WL number of noise samples at a neighborhood of the subcarrier, in which the subcarrier is positioned at the center of the window.

For estimating the noise covariance matrix, the processor 301 may implement a localized averaging approach centered at each subcarrier frequency. Specifically, for each subcarrier frequency position k, the processor 301 may compute a respective noise covariance matrix, which may be referred to as a respective estimate subcarrier noise covariance matrix, within a symmetric window of noise samples (i.e. within a neighborhood of frequencies designated by the window length) around the frequency of the subcarrier, using a samples on either side of the subcarrier frequency, where 2a+1 equals the determined window length. The processor 301 may compute the respective estimate subcarrier noise covariance matrix by averaging the noise samples within this window. For subcarriers near the band edges, where the full window length would extend beyond the available frequency band, the processor 301 may use zero padding or adjust the window length accordingly.

Illustratively, for a given subcarrier k, let $v_k$ represent a vector containing the noise samples within the window centered at the k-th subcarrier. For a window length WL = 2a+1, $v_k$ includes a samples on either side of the k-th subcarrier, such that $v_k = \Delta L(k-a : k+a)$, where $\Delta L$ represents the L-LTF difference vector. The processor 301 may then compute the respective subcarrier noise covariance matrix by averaging the outer products of these noise vectors within the window. For subcarriers near the band edges where the full window length would extend beyond the available frequency band, the processor 301 assumes zeros for the indices between k-a and k+a that fall outside the band edges.

The resulting noise covariance matrix estimate at each subcarrier frequency may represent the local characteristics of the noise, including both thermal noise and platform interference. For a communication device with multiple receive antennas, this localized estimation approach may enable the processor 301 to capture the spatial correlation of noise across different frequencies (and/or antennas) while adapting to frequency-dependent variations in the noise environment. The processor 301 may compute the respective subcarrier noise covariance matrix $\Sigma_k$ for the k-th subcarrier as: $\Sigma_k = E[v_k v_k^H]$ where $E[\cdot]$ denotes the expectation operator and H denotes the Hermitian transpose. This subcarrier-specific approach to noise covariance estimation can provide better granularity in capturing frequency-dependent noise variations compared to approaches that use a single noise covariance matrix for the entire frequency band or sub-band, particularly in environments where platform interference exhibits significant variation across frequencies.

In accordance with various aspects described herein, the processor 301 may determine, at a resolution of LTF's subcarrier spacing (312.5kHz), (a) on which subcarriers noise (e.g. the platform interference) is much higher than the thermal noise level and (b) how fast the sum of the platform noise and thermal noise variance is changing. The processor 301 may determine a change in variance per subcarrier. The processor 301 may determine window lengths centered around each subcarrier based on the rate and estimate a covariance matrix for each subcarrier by averaging platform interference and thermal noise covariance within the chosen window length and use it for the whitening on the respective subcarrier of the data symbols. If the subcarrier spacing in the data field is lower than that of LTF, then, for each (data) subcarrier index, the processor 301 may use the covariance matrix of spectrally the nearest subcarrier index in the LTF symbol.

In various aspects, the processor 301 may determine the window length in various manners. In some examples, the window length can be predefined to a fixed value (e.g. set at the manufacturing of the apparatus) that is smaller than the width of the sub-band of a signal configured to be received for communication purposes by the communication device. The fixed value may be set within the limitations considering the computation overhead and granularity to meet various key performance metrics for communication. Illustratively, the fixed value may be smaller to include less than half of the number of noise samples between consecutive subcarrier frequencies for each subcarrier.

It is to be noted that the window length may provide a trade-off between two important aspects of noise estimation. For example, when using a larger window length, the processor 301 averages more noise samples between consecutive subcarriers, potentially providing better noise estimation accuracy in frequency regions where the noise characteristics vary slowly. For example, when using a smaller window length, the estimation better may capture local variations in the noise characteristics, which is particularly important in frequency regions where the noise properties change rapidly across frequencies.

For example, when estimating the noise covariance matrix for a particular subcarrier frequency k, a window length of 25 means the processor 301 averages 12 noise samples before and 12 noise samples after the subcarrier frequency k, plus the sample at the subcarrier frequency k itself. This averaging of noise samples between consecutive subcarriers may help reduce the impact of random fluctuations while still maintaining sensitivity to local variations in the noise characteristics across the frequency band. The noise samples within the window may represent measurements of noise power at different frequency points between consecutive subcarriers, rather than at the subcarrier frequencies themselves. This may enable the processor 301 to capture the continuous nature of the noise characteristics across the frequency band, providing a more detailed understanding of how noise affects the signal between the discrete subcarrier frequencies.

Given the trade-off indicated above, the processor 301 may implement an adaptive windowing approach where different window lengths are used for different subsets of subcarriers based on the local characteristics of the noise. Specifically, the processor 301 may determine a first window length representing a first number of noise samples for a first subset of subcarriers and a second window length representing a second number of noise samples for a second subset of subcarriers, where the second number is smaller than the first number. The processor 301 may select this window length adaptively based on the characteristics of the noise power across the frequency band. For example, in frequency regions where the noise power varies slowly, the processor 301 may select a larger window length to improve the estimation accuracy through increased averaging. Conversely, in regions where the noise power changes rapidly, a smaller window length may be selected to better capture these local variations.

It is to be noted that the aspects described with the presence of the first and second window length applicable to different subsets are described in a manner including two different window lengths only as examples. There may be any integer number of different window lengths, each being applicable to a respective subset, and the skilled person would recognize how to populate any other aspects related to the presence of two different window lengths within this disclosure to any number of window lengths.

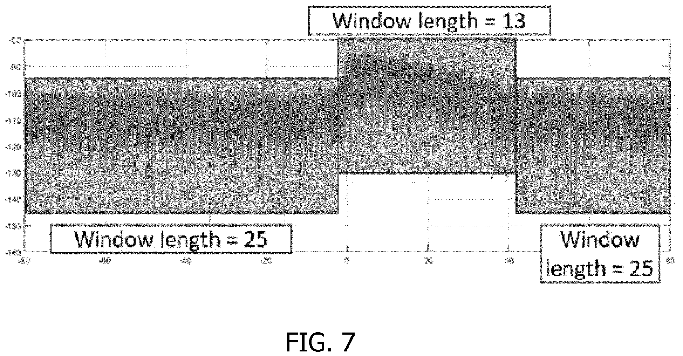

FIG. 7 illustrates a graphical representation of noise power characteristics over a frequency band, highlighting the processor's determination of different window lengths for noise covariance matrix estimation. The x-axis represents the frequency subcarriers in a frequency band of 160 MHz channel bandwidth, while the y-axis represents the noise power level in decibels dB. Different tones indicate noise power levels for different antennas of the same communication device.

The graph shows three distinct regions where different window lengths are applied for noise estimation. As illustrated herein, the processor 301 may determine to apply a first window length to the first subset of subcarriers within the first 80 MHz of the frequency band (between -80 MHz to 0) and the last 40 MHz of the frequency band (between 40 MHz to 80 MHz), and a second window length to the second subset of subcarriers within the band between 0 and 40 MHz. For the first subset, the processor 301 may utilize a window length of 25 samples, while for the second subset, the processor 301 may utilize a shorter window length of 13 samples. These window lengths are indicated by labeled boxes within the graph. In various examples, the first window length may represent 2M+1 number of samples and the second window length may represent 2N+1 number of samples, each of M and N being a respective integer.

The noise power characteristics are depicted as fluctuating lines within each region, illustrating the variations in noise power over the frequencies. The regions with a window length of 25 samples show a relatively stable noise power level, whereas the central region with a window length of 13 samples exhibits more pronounced fluctuations. This figure demonstrates the application of different window lengths for noise estimation in various frequency subcarrier regions. The choice of window length may be based on the rate of change of noise power characteristics within each region, with shorter window lengths used in regions with higher rates of change and longer window lengths in more stable regions.

The processor 301 may determine whether a subcarrier of the plurality of subcarriers belongs to the first subset of the plurality of subcarriers or the second subset of the plurality of subcarriers based on a rate of change of the noise power characteristics within a partial frequency band including the subcarrier frequency of the subcarrier. Illustratively, the processor 301 may determine the subset membership of each subcarrier by analyzing the rate of change of noise power characteristics within a partial frequency band centered around each subcarrier frequency. This partial frequency band may represent a local frequency neighborhood around the subcarrier being analyzed, to enable the processor 301 to assess how rapidly the noise characteristics are changing in the vicinity of that subcarrier.

For each subcarrier frequency position k, the processor 301 may examine the noise power characteristics within a defined partial frequency band around that position. The processor 301 may calculate the rate of change by analyzing how the noise power varies across this local frequency region. For example, if P(f) represents the noise power characteristic (e.g. noise power) at frequency f, the processor 301 may compute the rate of change as the average absolute difference in noise power between consecutive frequency points within the partial frequency band: Rate_of_change(k) = $(1/N) \sum |P(f_{i+1}) - P(f_i)|$ where fi represents discrete frequency points within the partial frequency band around subcarrier k, and N is the number of such differences computed. Based on this analysis, the processor 301 may assign each subcarrier of the plurality of subcarriers within the frequency band to either the first subset or the second subset (or further subsets, if applicable). Specifically, when the calculated rate of change exceeds a predetermined threshold, the processor 301 may assign the corresponding subcarrier to the second subset. This second subset may be associated with the smaller window length, allowing for more localized noise estimation in frequency regions where the noise characteristics vary rapidly. For example, if the rate of change of noise power exceeds 3 dB per subcarrier spacing, the processor 301 may assign that subcarrier to the second subset.

The threshold for determining subset membership is chosen based on the trade-off between estimation accuracy and the ability to track rapid variations in noise characteristics. A lower threshold may result in more subcarriers being assigned to the second subset, leading to more localized estimation but potentially increased variance in the estimates. Conversely, a higher threshold may allow more subcarriers to be assigned to the first subset, providing more averaging and potentially more stable estimates in regions where the noise characteristics vary slowly. For example, in a Wi-Fi system operating with a 20 MHz bandwidth, if the noise power shows rapid variations in certain frequency regions due to platform interference from specific components (as illustrated in FIG. 4), the subcarriers in these regions may be assigned to the second subset. The processor 301 might use a window length of 13 samples for these subcarriers, compared to a window length of 25 samples for subcarriers in more stable regions (.e.g. below a threshold) assigned to the first subset.

The processor 301 may implement a reference-based adaptive window length selection method. Illustratively, the processor 301 may determine a reference noise power level. The processor 301 may compute this reference level by averaging the noise power characteristics across the entire frequency band to indicate a global perspective of the noise environment. Correspondingly, the processor 301 may adjust the window length for each subcarrier of the plurality of subcarriers based on a difference between the reference noise power level and a local average of the noise power characteristics within a neighborhood of the subcarrier frequency of the respective subcarrier. For example, in a communication device operating with a 20 MHz bandwidth containing 52 subcarriers, the processor 301 may compute the reference level by averaging the noise power measurements across all subcarriers: Reference_Level = $(1/52) \Sigma P(k)$ where $P(k)$ represents the noise power at the k-th subcarrier frequency. This reference level may serve as a baseline against which local variations in noise characteristics can be compared.

For each subcarrier frequency, the processor 301 may compute a local average of the noise power characteristics within a defined neighborhood around that subcarrier. This neighborhood may typically include a predetermined number of frequency points on either side of the subcarrier frequency. For example, if using a neighborhood size of 5 (which may be any number that smaller or greater than a window length), the processor 301 may average the noise power characteristics from two frequency points before and two points after the subcarrier frequency, plus the point at the subcarrier frequency itself: Local _Average(k) = $(1/5) \Sigma P(k+i)$, $i \in \{-2,-1,0,1,2\}$. The processor 301 may then use the difference between the reference level and local average to adjust the window length. This difference may indicate how much the local noise characteristics deviate from the average noise behavior across the frequency band. The adjustment of the window length based on this difference may enable to adapt to both gradual and sudden changes in noise characteristics across the frequency band.

It is to be noted that in this adaptive approach, the window length that is to be adjusted may be a predefined or a predetermined window length. In some examples, this window length may be the window length that has been previously used (e.g. from a previously received signal) for this frequency band. In some examples, this window length may be the window length that has been previously used for the same subcarrier frequency (k). In some examples, the window length for a respective subcarrier may be the window length that has been determined for a subcarrier that is consecutive to the respective subcarrier.

In some aspects, the processor 301 may increase the window length for the respective subcarrier if the difference between the reference noise power level and the local average of the noise power characteristics within the neighborhood of the respective subcarrier is below a first threshold. For example, when the difference between the reference noise power level and the local average falls below a first threshold, the processor 301 may increase the window length for that particular subcarrier. For example, if the (current) window length is 13 samples and the difference is below the first threshold (e.g., 3 dB), the processor 301 may increase the window length to 25 samples.

In some examples, the processor 301 may implement this increase gradually to avoid sudden changes in estimation characteristics. For example, if the difference is smaller (compared to a certain difference level, e.g., < 1 dB), the processor 301 may increase the window length by a larger amount (e.g., from 13 to 25 samples). If the difference is closer to the threshold (e.g., 2-3 dB), the processor 301 may increase the window length by a smaller amount (e.g., from 13 to 19 samples).

In some aspects, the processor 301 may decrease the window length for the respective subcarrier if the difference between the reference noise power level and the local average of the noise power characteristics within the neighborhood of the respective subcarrier is above a second threshold. Illustratively, when the difference between the reference noise power level and the local average exceeds a second threshold, the processor 301 may decrease the window length for that subcarrier. For example, if the current window length is 25 samples and the difference exceeds the second threshold (e.g., 5 dB), the processor 301 may decrease the window length to 13 samples.

In some examples, the processor 301 may implement this decrease in window length while ensuring that the resulting window remains large enough to provide reliable noise estimates. For example, if the difference is significantly above the threshold (compared to a certain difference level, e.g., > 8 dB), the processor 301 may decrease the window length to its minimum allowed value (e.g., 7 samples). If the difference is just above the threshold (compared to the certain difference level e.g., 5-6 dB), the processor 301 may decrease the window length by a smaller amount (e.g., from 25 to 19 samples).

In some aspects, the processor 301 may combine each respective estimate subcarrier noise covariance matrix to obtain the estimated noise covariance matrix for use in subsequent whitening operations, after computing the respective estimate subcarrier noise covariance matrices for individual subcarriers as described herein based on a single window length or a respective window length that is specific to each subcarrier. In some examples, the combination may include weighted averaging of the respective estimate subcarrier noise covariance matrices across all subcarriers within the frequency band. For example, the processor 301 may determine the weights used in this averaging process based on factors such as the reliability of each subcarrier's estimate and the relative importance of different frequency regions.

For each subcarrier k, the processor 301 may determine the respective estimate subcarrier noise covariance matrix by averaging noise samples within a window centered at that subcarrier's frequency. The number of samples used in this averaging operation corresponds to the window length associated with that particular subcarrier. For example, with a window length of WL = 2a+1, the processor 301 may average noise samples on either side of the subcarrier frequency plus the sample at the subcarrier frequency itself, ensuring a symmetric distribution of samples around the center frequency.

Furthermore, the processor 301 may determine a corresponding whitening matrix for each respective estimate subcarrier noise covariance matrix. This subcarrier-specific whitening approach may enable more precise noise whitening that adapts to local frequency characteristics. For each subcarrier k, if $\Sigma_k$ represents the respective estimate subcarrier noise covariance matrix, the processor 301 may compute the corresponding whitening matrix $W_k$ such that: $W_k^H W_k = \Sigma_k^{-1}$.

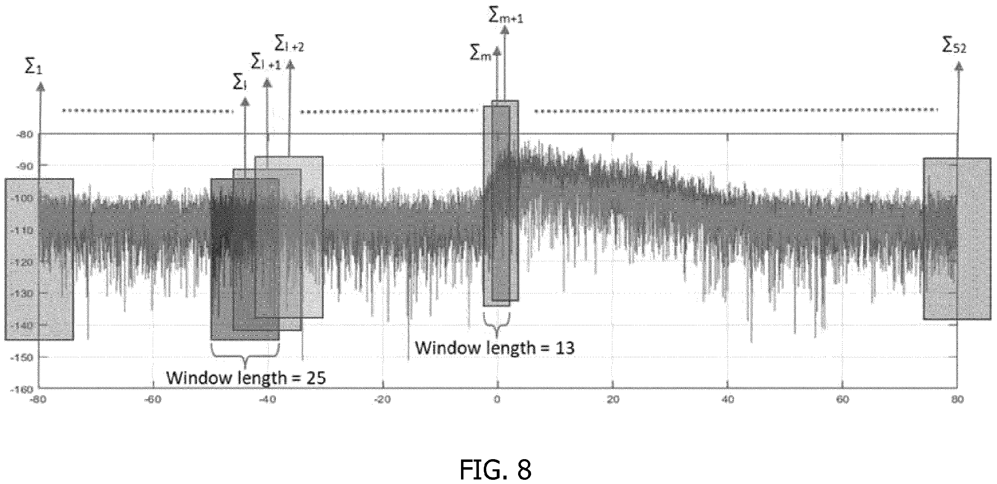

FIG. 8 illustrates a graphical representation of noise power characteristics over a frequency band, depicting the estimation of noise covariance matrices using different window lengths implemented illustratively by the processor 301. The x-axis represents the frequency subcarriers, while the y-axis represents the noise power levels in decibels dB. The graph shows two distinct window lengths used for averaging noise samples: a window length of 25 samples and a window length of 13 samples. These window lengths are used by the processor 301 to estimate the noise covariance matrix by averaging the noise samples centered at each subcarrier frequency.

The first window length of 25 samples is applied to a subset of subcarriers, illustratively for subcarriers 1, 1, 1+1, 1+2, and 52 are depicted. The second window length of 13 samples is applied to another subset of subcarriers, illustratively for subcarriers m and m+1. At each subcarrier frequency, the processor 301 may estimate a respective subcarrier noise covariance matrix for that subcarrier frequency by averaging the corresponding number of noise samples of the corresponding window length of that subcarrier frequency. Each estimated respective subcarrier noise covariance matrix is denoted by $\Sigma_k$ (k being the subcarrier index), which are labeled as $\Sigma_l$, $\Sigma_l$, $\Sigma_{l+1}$, $\Sigma_{l+2}$, $\Sigma_m$, $\Sigma_{m+1}$, and $\Sigma_{52}$, corresponding to different subcarrier frequencies.

The processor 301 may apply the whitening based on multiple whitening matrices, where each whitening matrix may specifically be computed for a neighborhood around a respective subcarrier frequency. This approach may enable the whitening operation to adapt to local frequency characteristics of the noise. Each whitening matrix may include whitening parameters that define how the whitening transformation should be applied to signals within the neighborhood of its corresponding subcarrier frequency. For example, if a received signal includes 52 subcarriers (as in a 20 MHz IEEE 802.11 configuration), the processor 301 may compute 52 distinct whitening matrices, as illustrated above, each optimized for its respective subcarrier frequency neighborhood. The whitening parameters within each matrix may capture the local noise correlation structure and provide the necessary transformation to decorrelate the noise components within that frequency neighborhood. When applying the whitening operation to subsequent received signals, the processor 301 may use these frequency-specific whitening matrices to ensure that the whitening is optimally adapted to local noise characteristics. The neighborhood associated with each whitening matrix corresponds to the frequency region where that matrix's whitening parameters are applied. This neighborhood may be defined similarly to the window used for noise covariance estimation, ensuring consistency between the estimation and whitening processes.

For each subcarrier k of the plurality of subcarriers, the processor 301 may maintain the one-to-one correspondence between the whitening matrices and subcarrier noise covariance matrices. Illustratively, the processor 301 may derive the whitening matrix for subcarrier k from the noise covariance matrix estimated specifically for subcarrier k. The processor 301 may perform this derivation across the frequency band for each subcarrier. In the example of the received signal including 52 subcarriers (e.g. as depicted in FIG. 8), the processor 301 may compute 52 distinct subcarrier noise covariance matrices ($\Sigma_1$, $\Sigma_2$, ..., $\Sigma_{52}$), each estimated using noise samples within a respective window centered at its respective subcarrier frequency. From these, the processor 301 may then compute 52 corresponding whitening matrices ($W_1$, $W_2$, ..., $W_{52}$), where each $W_k$ is specifically derived from its corresponding $\Sigma_k$.

For example, for each subcarrier k, the processor 301 may compute a respective whitening matrix $W_k$ that is based on the inverse principal square root of the estimated noise covariance matrix $\Sigma_k$. This computation can be expressed mathematically as: $W_k = \Sigma_k^{-1/2}$ where the inverse principal square root operation ensures that the resulting whitening matrix will decorrelate the noise components while maintaining the proper scaling. Since a noise covariance matrix $\Sigma_k$ is Hermitian ($\Sigma_k = \Sigma_k^H$) and positive semi-definite by definition, its SVD and eigen decomposition are equivalent, with V = U.

Correspondingly, the processor 301 may compute this inverse principal square root through eigenvalue decomposition. Specifically, if $\Sigma_k = UDU^H$ represents the eigen decomposition of the noise covariance matrix, where U contains the eigenvectors and D is a diagonal matrix of eigenvalues, the processor 301 may compute the whitening matrix as: $W_k = UD^{-1/2}U^H$ where $D^{-1/2}$ is obtained by taking the inverse square root of each eigenvalue.

This maintenance of the correspondence between each subcarrier's estimated noise covariance matrix and its whitening matrix may ensure that the whitening operation precisely matches the local noise characteristics at each frequency. The processor 301 may apply these subcarrier-specific whitening matrices to subsequent received signals, ensuring that signals at each subcarrier frequency are whitened according to the noise characteristics specifically estimated for that frequency.

The processor 301 may set whitening filter parameters based on the plurality of whitening matrices computed for each subcarrier as described herein. These parameters are used to configure a whitening filter implemented within the communication interface 303, for example, within the baseband processing chain. Illustratively, a digital filter structure implementing the whitening filter may apply the whitening transformation to received signals in real-time. For each subcarrier k, the processor 301 may convert the corresponding whitening matrix $W_k$ into specific filter parameters that can be applied by the digital filter structure. These parameters may include filter coefficients that enable the whitening filter to perform the desired whitening transformation. In some examples, the filter parameters may be stored in the memory 302 and be accessible by the whitening filter during signal processing operations.

Illustratively, when a new signal is received through the communication interface 303, the whitening filter may apply these parameters to transform the received signal. The whitening filter may process the signal on a subcarrier-by-subcarrier basis, applying the appropriate whitening parameters for each subcarrier frequency. For example, when processing the signal component at subcarrier k, the whitening filter may use the parameters derived from the whitening matrix $W_k$ to perform the whitening transformation specifically optimized for that subcarrier's noise characteristics. The whitening filter may be implemented as part of the baseband processor, allowing for real-time processing of received signals. The filter structure may be designed to efficiently apply the whitening parameters while maintaining low processing latency.

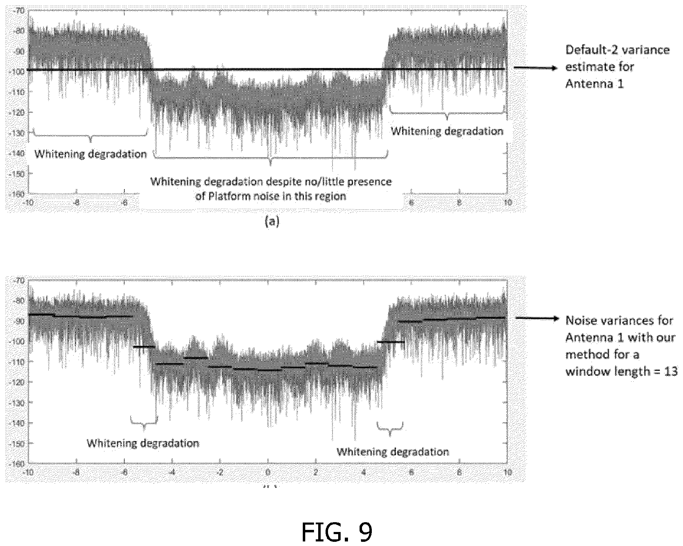

FIG. 9 illustrates an example of noise variance estimates for Antenna 1, comparing the Default-2 Method described herein and the noise variances obtained using a method with a window length of 13 as described in this disclosure. The figure includes two subfigures, labeled a and b, each depicting a graph of noise power characteristics over a frequency band.

Subfigure a shows the application of the Default-2 Method variance estimates for Antenna 1. The x-axis represents the frequency range, while the y-axis represents the noise power level in dB. The graph includes two curves in different tones, each for an antenna of the communication device, though only Antenna 1 is taken as an example. The graph highlights regions of whitening degradation, where the noise power characteristics deviate significantly from the estimated variance. Notably, there is a region in the middle of the frequency band where whitening degradation is observed despite little or no presence of platform noise.

Subfigure b shows the noise variances for Antenna 1 obtained using the described method with a window length of 13. Similar to subfigure a, the x-axis represents the frequency range, and the y-axis represents the noise power level in dB. The graph also highlights regions of whitening degradation, but the method with a window length of 13 shows improved performance in estimating the noise variances, particularly in the middle region of the frequency band where whitening degradation was previously observed.

Both subfigures emphasize the importance of accurately estimating noise variances to mitigate whitening degradation and improve the performance of the communication device. The comparison between the default-2 variance estimate and the method with a window length of 13 demonstrates the effectiveness of the proposed method in reducing whitening degradation and providing more accurate noise variance estimates.

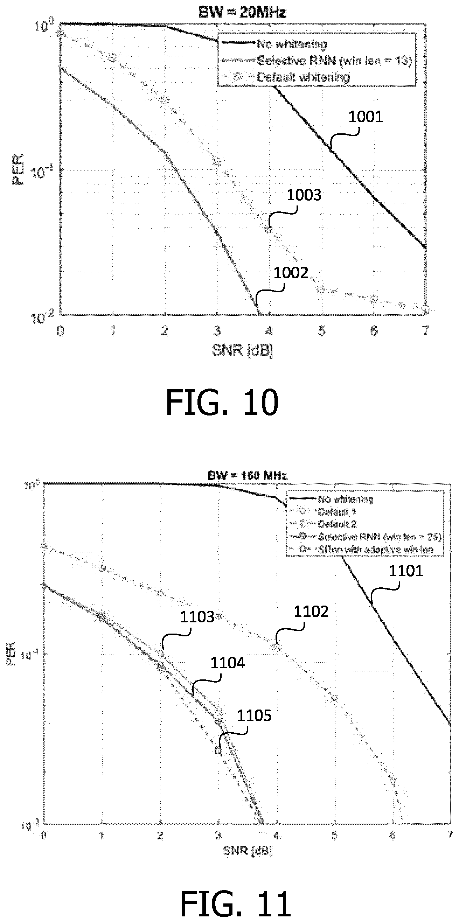

FIGs. 10 and 11 illustrate performance evaluation graphs for different whitening techniques applied to communication signals with varying bandwidths. The performance metric used is the Packet Error Rate PER plotted against the Signal-to-Noise Ratio SNR in decibels dB. FIG. 10 shows the performance comparison for a bandwidth BW of 20 MHz. The x-axis represents the SNR in dB, ranging from 0 to 7 dB, while the y-axis represents the PER on a logarithmic scale, ranging from $10^{-2}$ to $10^0$.

Three curves are depicted: No Whitening 1001, which represents the baseline performance without any whitening applied to the received signals. It shows the highest PER across all SNR values. The Selective RNN (win len = 13) 1002, which represents the performance when selective Recursive Noise Nulling RNN with a window length of 13 samples is applied and showing a significant improvement in PER compared to no whitening, especially at lower SNR values. Default Whitening 1003, which represents the performance with default whitening (Default Method 1) applied. It shows better performance than no whitening but is slightly less effective than the selective RNN approach.

FIG. 11 shows the performance comparison for a bandwidth BW of 160 MHz. Similar to Figure 10, the x-axis represents the SNR in dB, ranging from 0 to 7 dB, and the y-axis represents the PER on a logarithmic scale, ranging from $10^{-2}$ to $10^0$.

Four curves are depicted: No Whitening 1101, which represents the baseline performance without any whitening applied. It shows the highest PER across all SNR values. Default 1 1102, which represents the performance with the Default 1 Method. It shows better performance than no whitening but may not be the most effective method. Default 2 1103, which curve represents the performance with the Default 2 Method. It performs similarly to Default 1. Selective RNN (win len = 25) 1104, which represents the performance when selective RNN with a window length of 25 samples is applied. It shows a significant improvement in PER compared to the default whitening techniques. SRNN with adaptive win len 1105, which represents the performance when selective RNN with an adaptive window length is applied. It shows the best performance among all the techniques, with the lowest PER across all SNR values.

In both figures, the selective RNN techniques (both with fixed and adaptive window lengths) demonstrate superior performance in reducing the PER compared to the default whitening techniques and the no whitening baseline. The improvement is more pronounced at lower SNR values, indicating the effectiveness of the selective RNN approach in mitigating noise and enhancing signal quality in communication systems.

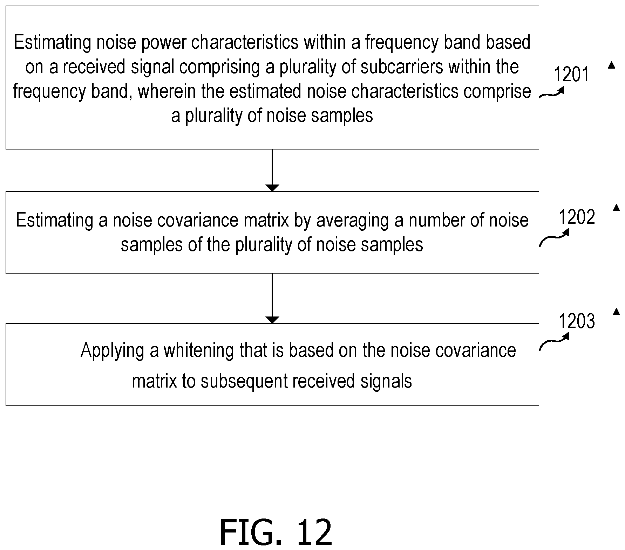

FIG. 12 shows an example of a method. The method 1200 may include: estimating 1201 noise power characteristics within a frequency band based on a received signal comprising a plurality of subcarriers within the frequency band, wherein the estimated noise power characteristics comprise a plurality of noise samples, estimating 1202 a noise covariance matrix by averaging a number of noise samples, and applying 1203 a whitening that is based on the noise covariance matrix to subsequent received signals. A non-transitory computer-readable medium may include instructions which, if executed by a processor, cause the processor to perform the method 1200.

The following examples pertain to further aspects of this disclosure.

Example 1, the subject matter includes an apparatus of a communication device, the apparatus includes (a memory and) a processor configured to: estimate noise power characteristics within a frequency band based on a received signal including a plurality of subcarriers within the frequency band, wherein the estimated noise power characteristics includes a plurality of noise samples; estimate a noise covariance matrix by averaging a number of noise samples; and apply a whitening that is based on the noise covariance matrix to subsequent received signals.

Example 2 may include the subject matter of example 1, wherein the received signal includes first long training symbols and second long training symbols; and wherein the processor is configured to estimate the noise power characteristics based upon the first long training symbols and the second long training symbols. For example, the received signal may include an L-LTF comprising the first and second long training symbols and the noise power characteristics may be estimated by calculating a difference between the first and second long training symbols.

Example 3 may include the subject matter of example 1 or example 2, wherein the noise power characteristics represent a noise including a platform noise of the communication device interfering with an antenna of the communication device.

Example 4 may include the subject matter of any one of examples 1 to 3, wherein the plurality of noise samples are determined over consecutive subcarriers of the plurality of subcarriers; and wherein the processor is further configured to estimate the noise covariance matrix by averaging the number of noise samples centered at each subcarrier frequency of the plurality of subcarriers. Example 4 may further include that the processor is further configured to determine a window length representing the number of noise samples.

Example 5 may include the subject matter of example 4, wherein the window length includes a first window length representing a first number of samples and a second window length representing a second number of samples that is smaller than the first number of samples; wherein the processor is configured to average the first number of noise samples centered at each subcarrier frequency of a first subset of the plurality of subcarriers and average the second number of noise samples centered at each subcarrier frequency of a second subset of the plurality of subcarriers.

Example 6 may include the subject matter of example 5, wherein the processor is further configured to determine whether a subcarrier of the plurality of subcarriers belongs to the first subset of the plurality of subcarriers or the second subset of the plurality of subcarriers based on a rate of change of the noise power characteristics within a partial frequency band including the subcarrier frequency of the subcarrier.

Example 7 may include the subject matter of example 6, wherein the subcarrier of the plurality of subcarriers is determined to belong to the second subset of the plurality of subcarriers if the rate of change of the estimated noise power characteristics within the partial frequency band is above a threshold.

Example 8 may include the subject matter of any one of examples 5 to 7, wherein the first window length represents 2M+1 number of samples and the second window length represents 2N+1 number of samples, each of M and N being a respective integer.

Example 9 may include the subject matter of example 8, wherein the first window length represents 25 number of samples and the second window length represents 13 number of samples.

Example 10 may include the subject matter of any one of examples 4 to 9, wherein the estimated noise covariance matrix includes a respective estimate subcarrier noise covariance matrix for each subcarrier of the plurality of subcarriers.

Example 11 may include the subject matter of example 10, wherein the processor is further configured to combine each respective estimate subcarrier noise covariance matrix across the plurality of subcarriers to obtain the estimated noise covariance matrix.

Example 12 may include the subject matter of example 10 or example 11, wherein each respective estimate subcarrier noise covariance matrix is determined by averaging a respective number of noise samples of the window length associated with a respective subcarrier, which is centered at the subcarrier frequency of the respective subcarrier.

Example 13 may include the subject matter of any one of examples 10 to 12, wherein the processor is further configured to determine a corresponding whitening matrix for each respective estimate subcarrier noise covariance matrix.

Example 14 may include the subject matter of any one of examples 4 to 13, wherein the processor is further configured to: determine a reference noise power level based on an average of the noise power characteristics across the frequency band; and adjust the window length for each subcarrier of the plurality of subcarriers based on a difference between the reference noise power level and a local average of the noise power characteristics within a neighborhood of the subcarrier frequency of the respective subcarrier.

Example 15 may include the subject matter of example 14, wherein the processor is configured to increase the window length for the respective subcarrier if the difference between the reference noise power level and the local average of the noise power characteristics within the neighborhood of the respective subcarrier is below a first threshold.

Example 16 may include the subject matter of example 14 or 15; wherein the processor is configured to decrease the window length for the respective subcarrier if the difference between the reference noise power level and the local average of the noise power characteristics within the neighborhood of the respective subcarrier is above a second threshold.

Example 17 may include the subject matter of any one of examples 4 to 16, wherein the whitening is based on a plurality of whitening matrices, each whitening matrix of the plurality of whitening matrices includes whitening parameters representing a corresponding whitening to be applied to a neighborhood of a respective subcarrier frequency of the plurality of subcarriers.

Example 18 may include the subject matter of example 17, wherein the processor is further configured to compute a respective whitening matrix for each subcarrier of the plurality of subcarriers based on an inverse principal square root of the estimated noise covariance matrix for the respective subcarrier.

Example 19 may include the subject matter of example 17 or 18, wherein the processor is further configured to set whitening filter parameters based on the plurality of whitening matrices.

Example 20 may include the subject matter of any one of examples 1 to 19, wherein the apparatus further includes a radio frequency (RF) interface coupled to a whitening filter.

Example 21 may include the subject matter of example 20, wherein the apparatus further includes the whitening filter configured to whiten received communication signals.

Example 22 may include the subject matter of any one of examples 1 to 21, wherein the apparatus is configured for operation in an IEEE 802.11 based network.

Example 23, the subject matter includes a method for a communication device, the method including: estimating noise power characteristics within a frequency band based on a received signal including a plurality of subcarriers within the frequency band, wherein the estimated noise power characteristics include a plurality of noise samples; estimating a noise covariance matrix by averaging a number of noise samples; and applying a whitening that is based on the noise covariance matrix to subsequent received signals.

Example 24 may include the subject matter of example 23, wherein the received signal includes first long training symbols and second long training symbols; and wherein the processor is configured to estimate the noise power characteristics based upon the first long training symbols and the second long training symbols. For example, the received signal may include an L-LTF comprising the first and second long training symbols and the noise power characteristics may be estimated by calculating a difference between the first and second long training symbols.

Example 25 may include the subject matter of example 23 or example 24, wherein the noise power characteristics represent a noise including a platform noise of the communication device interfering with an antenna of the communication device.

Example 26 may include the subject matter of any one of examples 23 to 25, wherein the plurality of noise samples are determined over consecutive subcarriers of the plurality of subcarriers; and wherein the processor is further configured to estimate the noise covariance matrix by averaging the number of noise samples centered at each subcarrier frequency of the plurality of subcarriers.

Example 27 may include the subject matter of example 26, wherein the processor is further configured to determine a window length representing the number of noise samples.

Example 28 may include the subject matter of example 27, wherein the window length includes a first window length representing a first number of samples and a second window length representing a second number of samples that is smaller than the first number of samples; and wherein the method further includes averaging the first number of noise samples centered at each subcarrier frequency of a first subset of the plurality of subcarriers and averaging the second number of noise samples centered at each subcarrier frequency of a second subset of the plurality of subcarriers.

Example 29 may include the subject matter of example 28, may further include determining whether a subcarrier of the plurality of subcarriers belongs to the first subset of the plurality of subcarriers or the second subset of the plurality of subcarriers based on a rate of change of the noise power characteristics within a partial frequency band including the subcarrier frequency of the subcarrier.

Example 30 may include the subject matter of example 29, wherein the subcarrier of the plurality of subcarriers is determined to belong to the second subset of the plurality of subcarriers if the rate of change of the estimated noise power characteristics within the partial frequency band is above a threshold.

Example 31 may include the subject matter of any one of examples 27 to 30, wherein the first window length represents 2M+1 number of samples and the second window length represents 2N+1 number of samples, each of M and N being a respective integer.

Example 32 may include the subject matter of example 31, wherein the first window length represents 25 number of samples and the second window length represents 13 number of samples.

Example 33 may include the subject matter of any one of examples 27 to 32, wherein the estimated noise covariance matrix includes a respective estimate subcarrier noise covariance matrix for each subcarrier of the plurality of subcarriers.

Example 34 may include the subject matter of example 33, may further include combining each respective estimate subcarrier noise covariance matrix across the plurality of subcarriers to obtain the estimated noise covariance matrix.

Example 35 may include the subject matter of example 33 or example 34, wherein each respective estimate subcarrier noise covariance matrix is determined by averaging a respective number of noise samples of the window length associated with a respective subcarrier, which is centered at the subcarrier frequency of the respective subcarrier.

Example 36 may include the subject matter of any one of examples 33 to 35, may further include determining a corresponding whitening matrix for each respective estimate subcarrier noise covariance matrix.

Example 37 may include the subject matter of any one of examples 27 to 36, may further include: determining a reference noise power level based on an average of the noise power characteristics across the frequency band; and adjusting the window length for each subcarrier of the plurality of subcarriers based on a difference between the reference noise power level and a local average of the noise power characteristics within a neighborhood of the subcarrier frequency of the respective subcarrier.

Example 38 may include the subject matter of example 37, may further include increasing the window length for the respective subcarrier if the difference between the reference noise power level and the local average of the noise power characteristics within the neighborhood of the respective subcarrier is below a first threshold.

Example 39 may include the subject matter of example 37 or example 38, may further include decreasing the window length for the respective subcarrier if the difference between the reference noise power level and the local average of the noise power characteristics within the neighborhood of the respective subcarrier is above a second threshold.

Example 40 may include the subject matter of any one of examples 27 to 39, wherein the whitening is based on a plurality of whitening matrices, each whitening matrix of the plurality of whitening matrices includes whitening parameters representing a corresponding whitening to be applied to a neighborhood of a respective subcarrier frequency of the plurality of subcarriers.

Example 41 may include the subject matter of example 40, may further include computing a respective whitening matrix for each subcarrier of the plurality of subcarriers based on an inverse principal square root of the estimated noise covariance matrix for the respective subcarrier.

Example 42 may include the subject matter of example 40 or example 31, may further include setting whitening filter parameters based on the plurality of whitening matrices.

Example 43 may include the subject matter of any one of examples 24 to 42, may further include coupling a radio frequency (RF) interface to a whitening filter.

Example 44 may include the subject matter of example 43, may further include whitening received communication signals using the whitening filter.

Example 45 may include the subject matter of any one of examples 24 to 44, wherein the method is configured for operation in an IEEE 802.11 based network.

Example 46, a non-transitory computer-readable medium including instructions which, if executed by a processor, cause the processor to perform the method of any one of examples 24 to 46.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

Any vector and/or matrix notation utilized herein is exemplary in nature and is employed solely for purposes of explanation. Accordingly, the apparatuses and methods of this disclosure accompanied by vector and/or matrix notation are not limited to being implemented solely using vectors and/or matrices, and that the associated processes and computations may be equivalently performed with respect to sets, sequences, groups, etc., of data, observations, information, signals, samples, symbols, elements, etc.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The terminology in accordance with open-RAN (O-RAN) specifications is to be considered for Radio Units (RUs), Distributed Units (DUs) and Centralized Units (CUs). Inherently, a base station is considered to be disaggregated into such units in accordance with layers of a corresponding protocol stack into these logical nodes, which all of them can be implemented by the same device or multiple devices in which each device may be deployed with one of these units.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electromagnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/-formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

**Claims**

1. An apparatus of a communication device, the apparatus comprises a processor configured to:

   estimate noise power characteristics within a frequency band based on a received signal comprising a plurality of subcarriers within the frequency band, wherein the noise power characteristics comprises a plurality of noise samples;
   estimate a noise covariance matrix by averaging a number of noise samples of the plurality of noise samples; and
   apply a whitening that is based on the noise covariance matrix to subsequent received signals.

2. The apparatus of claim 1, wherein the received signal comprises first long training symbols and second long training symbols; and
   wherein the processor is configured to estimate the noise power characteristics based upon the first long training symbols and the second long training symbols.

3. The apparatus of any one of claims 1 to 2, wherein the plurality of noise samples are determined over consecutive subcarriers of the plurality of subcarriers; and
   wherein the processor is further configured to estimate the noise covariance matrix by averaging the number of noise samples centered at each subcarrier frequency of the plurality of subcarriers.

4. The apparatus of claim 3, wherein the processor is further configured to determine a window length representative of the number of samples.

5. The apparatus of claim 4, wherein the window length comprises a first window length representing a first number of samples and a second window length representing a second number of samples that is smaller than the first number of samples; and
   wherein the processor is configured to average the first number of noise samples centered at each subcarrier frequency of a first subset of the plurality of subcarriers and average the second number of noise samples centered at each subcarrier frequency of a second subset of the plurality of subcarriers.

6. The apparatus of claim 5, wherein the processor is further configured to determine whether a subcarrier of the plurality of subcarriers belongs to the first subset of the plurality of subcarriers or the second subset of the plurality of subcarriers based on a rate of change of the noise power characteristics within a partial frequency band including the subcarrier frequency of the subcarrier.

7. The apparatus of claim 6, wherein the subcarrier of the plurality of subcarriers is determined to belong to the second subset of the plurality of subcarriers if the rate of change of the noise power characteristics within the partial frequency band is above a threshold.

8. The apparatus of any one of claims 4 to 7, wherein the noise covariance matrix comprises a respective estimate subcarrier noise covariance matrix for each subcarrier of the plurality of subcarriers.

9. The apparatus of claim 8, wherein each respective estimate subcarrier noise covariance matrix is determined by averaging a respective number of noise samples of the window length associated with a respective subcarrier, which is centered at the subcarrier frequency of the respective subcarrier.

10. The apparatus of any one of claims 4 to 9, wherein the processor is further configured to:

    determine a reference noise power level based on an average of the noise power characteristics across the frequency band; and
    adjust the window length for each subcarrier of the plurality of subcarriers based on a difference between the reference noise power level and a local average of the noise power characteristics within a neighborhood of the subcarrier frequency of the respective subcarrier.

11. The apparatus of any one of claims 4 to 10, wherein the whitening is based on a plurality of whitening matrices, each whitening matrix of the plurality of whitening matrices comprises whitening parameters representing a corresponding whitening to be applied to a neighborhood of a respective subcarrier frequency of the plurality of subcarriers.

12. The apparatus of claim 11, wherein the processor is configured to increase the window length for the respective subcarrier if the difference between a reference noise power level and a local average of the noise power characteristics within the neighborhood of the respective subcarrier is below a first threshold; and/or decrease the window length for the respective subcarrier if the difference between the reference noise power level and the local average of the noise power characteristics within the neighborhood of the respective subcarrier is above a second threshold.

13. The apparatus of any one of claims 3 to 12, wherein the whitening is based on a plurality of whitening matrices, each whitening matrix of the plurality of whitening matrices comprises whitening parameters representing a corresponding whitening to be applied to a neighborhood of a respective subcarrier frequency of the plurality of subcarriers.

14. A method for a communication device, the method comprising:

estimating noise power characteristics within a frequency band based on a received signal comprising a plurality of subcarriers within the frequency band, wherein the noise power characteristics comprise a plurality of noise samples;
estimating a noise covariance matrix by averaging a number of noise samples of the plurality of noise samples; and
applying a whitening that is based on the noise covariance matrix to subsequent received signals.

15. A non-transitory computer-readable medium comprising instructions which, if executed by a processor, cause the processor to perform the method of claim 14.

FIG. 1

FIG. 2

FIG. 3

Thermal noise + platform interference power level

FIG. 4

**Default method 1**

**Default method 2**

FIG. 5

FIG. 6

FIG. 7

FIG. 8

EP 4 753 156 A1

Default-2 variance
estimate for
Antenna 1

Whitening degradation

Whitening degradation

Whitening degradation despite no/little presence
of Platform noise in this region

(a)

Noise variances for
Antenna 1 with our
method for a
window length = 13

Whitening degradation

Whitening degradation

FIG. 9

**BW = 20MHz**

FIG. 10

**BW = 160 MHz**

FIG. 11

Estimating noise power characteristics within a frequency band based on a received signal comprising a plurality of subcarriers within the frequency band, wherein the estimated noise characteristics comprise a plurality of noise samples — 1201

Estimating a noise covariance matrix by averaging a number of noise samples of the plurality of noise samples — 1202

Applying a whitening that is based on the noise covariance matrix to subsequent received signals — 1203

# FIG. 12

Europäisches
Patentamt

European
Patent Office

Office européen
des brevets

# EUROPEAN SEARCH REPORT

**Application Number**

EP 24 21 6451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 156 528 A1 (INTEL CORP [US]) 29 March 2023 (2023-03-29) * the whole document * | 1-15 | INV. H04B1/10 |
| X | US 9 112 744 B1 (VENKATESH SWAROOP [US] ET AL) 18 August 2015 (2015-08-18) * column 1, lines 35-52 * * column 8, lines 59-67 * | 1-15 | |
| A | CN 106 549 897 B (ZTE CORP; ZTE CANADA INC) 8 October 2019 (2019-10-08) * abstract * | 1-15 | |

**TECHNICAL FIELDS SEARCHED (IPC)**

H04B

The present search report has been drawn up for all claims

| Place of search | Date of completion of the search | Examiner |
|---|---|---|
| Munich | 14 May 2025 | Marques, Gabriela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 6451

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2025

| Patent document cited in search report | | Publication date | Patent family member(s) | | Publication date |
|---|---|---|---|---|---|
| EP 4156528 | A1 | 29-03-2023 | EP | 4156528 A1 | 29-03-2023 |
| | | | US | 2023098162 A1 | 30-03-2023 |
| US 9112744 | B1 | 18-08-2015 | NONE | | |
| CN 106549897 | B | 08-10-2019 | CN | 106549897 A | 29-03-2017 |
| | | | US | 2017085401 A1 | 23-03-2017 |

EPO FORM P0459

For more details about this annex : see Official Journal of the European Patent Office, No. 12/82